# EUROPÄISCHE PATENTANMELDUNG

(11) **EP 3 518 150 A1**
(43) Veröffentlichungstag der Anmeldung: **31.07.2019**
(21) Anmeldenummer: 18210427.3
(22) Anmeldetag: 05.12.2018
(51) Int. Cl.: G06K 19/06, E04H 6/42, G08G 1/14, B62D 15/02, G05D 1/02

(54) **PARKSYSTEM ZUR DETEKTION UND VERWALTUNG VON BELEGTEN UND NICHT BELEGTEN PARKSTÄNDEN**

(30) Priorität: 15.01.2018 DE 102018200574
(71) Anmelder: ZF Friedrichshafen AG, 88046 Friedrichshafen (DE)
(72) Erfinder: Zhang, Bin, 88069 Tettnang (DE); Oprisan, Dan, 88147 Achberg (DE)

(57) **Zusammenfassung**

Mehrdimensionaler Code (1) mit codierten Informationen, die durch ein Erfassen des Codes lesbar sind, zur Markierung eines Parkstandes (11, 12, 13) einer Parkfläche (10), wobei der Code (1) an den Parkstand (11, 12, 13) anordenbar ist, und eine codierte Information eine Nummer (2) des Parkstands (11, 12, 13) ist. Außerdem betrifft die Erfindung eine Verwendung eines erfindungsgemäßen mehrdimensionalen Codes (1) in einem Parkhaus (14), einen Parkroboter (20), ein Parksystem (40), eine Verwendung eines erfindungsgemäßen Parksystems (40) in einem Parkhaus (14) und ein Verfahren zum automatisierten Transportieren und Parken von Fahrzeugen (5) auf einer Parkfläche (10) mit Parkständen (11, 12, 13), wobei die Parkstände (11, 12, 13) jeweils mit einem erfindungsgemäßen mehrdimensionalen Code (1) markiert sind.

## Beschreibung

Die Erfindung betrifft einen mehrdimensionalen Code zur Markierung eines Parkstandes nach Anspruch 1. Ferner betrifft die Erfindung eine Verwendung eines erfindungsgemäßen mehrdimensionalen Codes in einem Parkhaus nach Anspruch 5. Des Weiteren betrifft die Erfindung einen Parkroboter nach Anspruch 6. Außerdem betrifft die Erfindung ein Parksystem nach Anspruch 8. Zusätzlich betrifft die Erfindung eine Verwendung eines erfindungsgemäßen Parksystems nach Anspruch 10. Schließlich betrifft die Erfindung auch ein Verfahren zum automatisierten Transportieren und Parken von Fahrzeugen auf einer Parkfläche mit Parkständen nach Anspruch 11.

Aus dem Stand der Technik sind fahrerlose Systeme bekannt, die dem Fahrer mithilfe vernetzter Technik eine häufig lästige Parkplatzsuche und einen Parkvorgang abnehmen. Diese Parksysteme, auch Automated Valet Parking Systeme genannt, basieren auf einer Kommunikation zwischen einer Parkplatzinfrastruktur und dem Fahrzeug. Zum Beispiel ist ein stationärer Sensor zur Bestimmung einer Position eines sich in einem Parkhaus bewegenden Fahrzeuges bekannt. Der stationäre Sensor ist Teil der Parkeinrichtung. Relevanten Stand der Technik ist beispielsweise in der US 20160318510 A1 offenbart.

Die bekannten Automated Valet Parking Systeme erfordern eine aufwendige Infrastruktur von Parkeinrichtungen, insbesondere eine große Anzahl an stationären Sensoren, die mit Umfelderfassungseinrichtungen von einfahrenden fahrzeugen kommunizieren.

Hier setzt die Erfindung an. Der Erfindung hat die Aufgabe zugrunde gelegen, ein Parksystem bereitzustellen, das das automatisierte Einparken von Fahrzeugen in freie Parkplätze in einem Parkhaus vereinfacht und einen Mischbetrieb einer Parkeinrichtung mit fahrerlosen und von menschlichen Fahrern geführten Fahrzeugen erlaubt.

Die Aufgabe wird gelöst durch einen mehrdimensionalen Code mit den Merkmalen des Anspruchs 1, eine Verwendung eines erfindungsgemäßen mehrdimensionalen Codes in einem Parkhaus nach Anspruch 5, einen Parkroboter mit den Merkmalen des Anspruchs 6, ein Parksystem mit den Merkmalen des Anspruchs 8, eine Verwendung eines erfindungsgemäßen Parksystems mit den Merkmalen des Anspruchs 10 und durch ein Verfahren mit den Merkmalen des Anspruchs 11.

Vorteilhafte Ausgestaltungen und Weiterbildungen der Erfindung sind in den Unteransprüchen angegeben.

Erfindungsgemäß wird ein mehrdimensionaler Code mit codierten Informationen, die durch ein Erfassen des Codes lesbar sind, bereitgestellt zur Markierung eines Parkstandes einer Parkfläche. Der Code ist an den Parkstand derart anordenbar, dass bei einer Belegung des Parkstandes mit einem Fahrzeug der Code durch das Fahrzeug verdeckt ist. Erfindungsgemäß ist eine codierte Information eine Nummer des Parkstandes.

Mehrdimensionale Codes sind, vorzugsweise optoelektronisch, lesbare Schriften, die aus verschiedenen, vorzugsweise geometrischen, Elementen und dazwischen angeordneten Freiräumen mit möglichst hohem Kontrast bestehen. Informationen sind nicht nur in einer Richtung codiert, sondern in Form eines mehrdimensionalen Objekts, z.B. einer Fläche. Im Vergleich zu einem eindimensionalen Code, beispielsweise einem Strichcode oder Barcode, hat ein mehrdimensionaler Code den Vorteil, dass eine höhere Dichte an Nutzinformationen erreicht ist. Zum Beispiel ist ein zweidimensionaler Code in Form einer zweidimensionalen Fläche ein mehrdimensionaler Code. Ein Beispiel für einen zweidimensionalen Code ist ein Quick Response Code, abgekürzt QR Code, wie z.B. in der EP 0 672 994 A1 offenbart.

Codierte Informationen eines mehrdimensionalen Codes sind Abbildungen der Informationen in Symbolen.

Die codierten Informationen sind durch ein Erfassen des Codes lesbar. Dabei bedeutet das Erfassen des Codes, dass sich die codierte Information an eine technische Vorrichtung, z.B. einen optischen Sensor, richtet. Die technische Vorrichtung decodiert die Information und verarbeitet diese weiter um ein technisches Problem mit technischen Mitteln zu lösen. Zum Beispiel werden die codierten Informationen in einem Quick Response Code mit Lesegeräten, vorzugsweise optischen Lesegeräten wie Kamerascannern, maschinell gelesen und elektronisch weiterverarbeitet, z.B. als ein Signal an ein Parksystem gesendet. Damit enthält der mehrdimensionale Code zwar eine Information. Diese Information richtet sich aber nicht an den menschlichen Geist, sondern an eine technische Vorrichtung, die diesen Code zunächst decodieren muss. Es liegt also keine informationelle Einwirkung auf einen Menschen vor. Das technische Problem, das mit dem mehrdimensionalen Code gelöst wird, ist eine Markierung eines Parkstandes einer Parkfläche.

Ein Parkstand ist eine abgegrenzte Fläche in einem öffentlichen Verkehrsraum. Der Parkstand dient dem Parken eines Fahrzeuges. Eine Parkfläche ist eine zusammenhängende Fläche, die aus mehreren Parkständen besteht. Verbindungswege innerhalb einer Parkfläche heißen Fahrgassen.

Das Merkmal des Codes, nämlich dass dieser an dem Parkstand derart anordenbar ist, dass bei einer Belegung des Parkstandes mit einem Fahrzeug der Code durch das Fahrzeug verdeckt ist, hat den Vorteil, dass der Code bei Belegung des Parkstandes nicht erfassbar ist. Wird in einem Parksystem ein Code erfasst, bedeutet dies, dass der dazugehörige Parkstand frei ist.

In Abhängigkeit der Nummer des Parkstandes ist feststellbar, welche Parkstände belegt oder nicht belegt sind. Wurden zum Beispiel in einer Parkreihe nach entsprechender Decodierung der angebrachten mehrdimensionalen Codes die Nummern 10, 11, 13 und 14 erfasst, weiß das Parksystem, dass der Parkstand mit Nummer 12 belegt ist.

Vorteilhafterweise ist der Code auf eine Boden- und/oder Wandfläche des Parkstandes aufdruckbar. Durch das Aufdrucken kann besonders einfach die Anordnung des Codes realisiert werden, sodass dieser bei einer Belegung des Parkstandes mit einem Fahrzeug durch das Fahrzeug verdeckt ist.

In einer besonders vorteilhaften Ausgestaltung der Erfindung enthalten die codierten Informationen Koordinaten des Parkstandes und/oder ein Nutzungsrecht für diesen Parkstand.

Anhand der Koordinaten des Parkstandes kann ein Parkroboter, der den Code erfasst, seine Position in Relation zu dem Parkstand bestimmen. Allgemein ist die Positionsbestimmung in Relation zu Umgebungsmerkmalen bekannt als Simultaneous Localization and Mapping, abgekürzt SLAM. Die codierten Koordinaten des Parkstandes ermöglichen damit ein SLAM-Verfahren, mittels dem ein Parkroboter auf einer Parkfläche navigieren kann. Dies ist besonders in abgeschlossenen Parkhäusern von Vorteil, in denen keine drahtlose Kommunikation zu externen Einrichtungen möglich ist. Dort wird durch SLAM eine in-house Navigation verbessert.

Ein Nutzungsrecht für den Parkstand ist ein Recht für bestimmte Fahrzeugtypen, die auf diesem Parkstand parken dürfen. Zum Beispiel stellt ein als ein Behindertenparkplatz ausgewiesener Parkstand ein Nutzungsrecht für einen Behinderten dar. Weitere Beispiele für Nutzungsrechte sind Frauenparkplätze, Familienparkplätze oder Mofaparkplätze.

Bevorzugt ist der mehrdimensionale Code ein Quick Response Code. Für Quick Response Codes ist eine Vielzahl von Lesegeräten und Decodierverfahren bekannt.

Erfindungsgemäß wird ein erfindungsgemäßer mehrdimensionaler Code zur Markierung von Parkständen vorzugsweise in einem Parkhaus verwendet. Damit lassen sich Parkstände für ein Parksystem einfach markieren.

Der erfindungsgemäße Parkroboter ist ausgebildet, ein Fahrzeug auf einer Parkfläche von einem Übergabebereich zu einem Parkstand und/oder von dem Parkstand zu dem Übergabebereich zu transportieren und verfügbare Parkstände zu erkennen. Der erfindungsgemäße Parkroboter weist eine Eingangsschnittstelle auf. Die Eingangsschnittstelle ist ausgebildet, Daten über einen Belegungszustand und/oder Fahrgassen der Parkfläche zu erhalten. Ferner weist der Parkroboter ein Lesegerät auf. Das Lesegerät ist ausgebildet, an den Parkständen jeweils angeordnete erfindungsgemäße mehrdimensionale Codes zu erfassen und zu lesen. Außerdem weist der Parkroboter eine Ausgabeschnittstelle auf. Die Ausgabeschnittstelle ist ausgeführt, in Abhängigkeit der gelesenen Codes die verfügbaren Parkstände bereitzustellen. Der Parkroboter ist ausgebildet, in Abhängigkeit der Daten und der gelesenen Codes das Fahrzeug auf dem Parkstand zu positionieren.

Ein Parkroboter ist eine Transporteinheit, die ausgebildet ist, Fahrzeuge zu transportieren und auf einem Parkstand zu positionieren. Der Parkroboter weist einen Grundkörper und eine Antriebsvorrichtung auf. Mit dem Grundkörper wird ein Fahrzeug positioniert. Mit der Antriebsvorrichtung wird das Fahrzeug zusammen mit dem Parkroboter transportiert.

Der Übergabebereich, auch Drop-off Zone genannt, ist der Bereich, in dem ein Fahrer sein Fahrzeug an das Automated Valet Parking System übergibt. Vorteilhafterweise befindet sich der Übergabebereich in einem Einfahrtbereich der Parkfläche oder eines Parkdecks in einem Parkhaus.

Eine Schnittstelle ist eine Einrichtung zwischen wenigstens zwei Funktionseinheiten, an der ein Austausch von logischen Größen, z.B. Daten, oder physikalischen Größen, z.B. elektrischen Signalen, erfolgt, entweder nur unidirektional oder bidirektional. Der Austausch kann analog oder digital erfolgen. Der Austausch kann drahtlos oder drahtgebunden erfolgen. Eine Schnittstelle kann zwischen Software und Software, Hardware und Hardware sowie Software und Hardware und Hardware und Software bestehen.

Das Lesegerät weist einen optischen Sensor, vorzugsweise eine Kamera, auf, mit dem der Code erfasst wird. Des Weiteren ist das Lesegerät ausgeführt, einen Algorithmus auszuführen, mit dem der Code decodiert und verfahrenstypische Darstellungsfehler eliminiert werden.

Vorteilhafterweise ist der Parkroboter ausgebildet, in Abhängigkeit von codierten Koordinaten der Parkstände auf der Parkfläche zu navigieren. Damit kann der Parkroboter z.B. mittels Simultaneous Localization and Mapping, SLAM, seine Position auf der Parkfläche in Bezug auf die Codes selbst bestimmen.

Das erfindungsgemäße Parksystem weist eine Parkfläche mit Parkständen auf. Die Parkstände sind jeweils mit einem erfindungsgemäßen mehrdimensionalen Code markiert. Außerdem weist das Parksystem einen erfindungsgemäßen Parkroboter auf. Des Weiteren weist das Parksystem eine Parkauswerteeinrichtung auf. Die Parkauswerteeinrichtung ist ausgebildet, den Parkrobotern Fahrgassen und/oder Nummern von verfügbaren Parkständen bereitzustellen und die Fahrgassen und/oder Nummern von verfügbaren Parkständen in Abhängigkeit der von den Parkrobotern gelesenen Codes zu aktualisieren.

Die Parkauswerteeinrichtung ist eine Vorrichtung, die eingehende Informationen verarbeitet und ein aus dieser Verarbeitung resultierendes Ergebnis ausgibt. Insbesondere ist die Parkauswerteeinrichtung eine elektronische Schaltung, wie z.B. eine zentrale Prozessoreinheit.

In einer Weiterbildung des erfindungsgemäßen Parksystems weist das Parksystem eine Flotte von Parkrobotern auf. Das Parksystem kann die Fähigkeiten einzelner Parkroboter gezielt einsetzen und die Macht der Flotte von Parkrobotern zur Verwaltung von belegten und nicht-belegten Parkständen einer Parkfläche oder in einem Parkhaus nutzen, analog zu einer Schwarmintelligenz.

Erfindungsgemäß wird das erfindungsgemäße Parksystem in einem Parkhaus verwendet.

Bei dem erfindungsgemäßen Verfahren zum automatisierten Transportieren und Parken von Fahrzeugen auf einer Parkfläche mit Parkständen sind die Parkstände jeweils mit einem erfindungsgemäßen mehrdimensionalen Code markiert. Das Verfahren weist die folgenden Schritte auf:
- Übergabe eines Fahrzeuges in einem Übergabebereich,
- Auswahl eines verfügbaren Zielparkstandes der Parkfläche mit einer Parkauswerteeinrichtung,
- in Abhängigkeit des ausgewählten Zielparkstandes Bereitstellen eines Parkroboters durch die Parkauswerteeinrichtung,
- Transport des Fahrzeuges zu dem Zielparkstand durch den Parkroboter,
- während des Transports Erfassen und Lesen der mehrdimensionalen Codes durch den Parkroboter und Bereitstellen von decodierten Informationen an die Parkauswerteeinrichtung,
- in Abhängigkeit des Zielparkstandes und der decodierten Informationen Parken des Fahrzeuges und Bereitstellen dieses Parkzustandes an die Parkauswerteeinrichtung,
- Weiterfahren des Parkroboters auf der Parkfläche, und
- während der Weiterfahrt Erfassen und Lesen der mehrdimensionalen Codes durch den Parkroboter und Bereitstellen von decodierten Informationen an die Parkauswerteeinrichtung zur Aktualisierung eines Belegungszustandes der Parkfläche.

Der Vorteil des erfindungsgemäßen Verfahrens im Vergleich zu bekannten Automated Valet Parking Systemen sind geringe Anforderungen an die Infrastruktur der Parkeinrichtung.

Vorzugsweise transportiert der Parkroboter in Abhängigkeit von Daten der Parkauswerteeinrichtung das Fahrzeug von dem Zielparkstand zu dem Übergabebereich und stellt eine Nummer des frei gewordenen Zielparkstandes der Parkauswerteeinrichtung bereit.

In einer vorteilhaften Ausgestaltung des Verfahrens ist vorgesehen, dass die Parkauswerteeinrichtung dem Parkroboter Fahrgassen für den Transport des Fahrzeuges vorgibt. Damit wird sichergestellt, dass auch Bereiche der Parkfläche von Parkrobotern patrouilliert werden, die im gewöhnlichen Betrieb des Parksystems nicht oft befahren werden.

Gemäß einer Weiterbildung der Erfindung stellt die Parkauswerteeinrichtung eine Flotte von Parkrobotern bereit und gibt den Parkrobotern der Flotte Fahrgassen für den Transport des Fahrzeuges vor.

Bevorzugt wird zur Durchführung des Verfahrens ein erfindungsgemäßer Parkroboter und/oder ein erfindungsgemäßes Parksystem verwendet.

Die Erfindung wird anhand der folgenden Figuren ausführlich beschrieben. Es zeigen:
- Fig. 1:: ein Ausführungsbeispiel eines erfindungsgemäßen mehrdimensionalen Codes,
- Fig. 2:: ein Ausführungsbeispiel eines erfindungsgemäßen Parkroboters,
- Fig. 3:: ein Ausführungsbeispiel eines erfindungsgemäßen Parksystems,
- Fig. 4:: ein Ausführungsbeispiel eines Parkhauses und
- Fig. 5:: ein Ausführungsbeispiel eines erfindungsgemäßen Verfahrens.

In den Figuren bezeichnen gleiche Bezugszeichen gleiche oder funktionsähnliche Bezugsteile. In den relevanten Figuren werden die jeweils relevanten Bezugsteile mit den dazugehörigen Bezugszeichen gekennzeichnet.

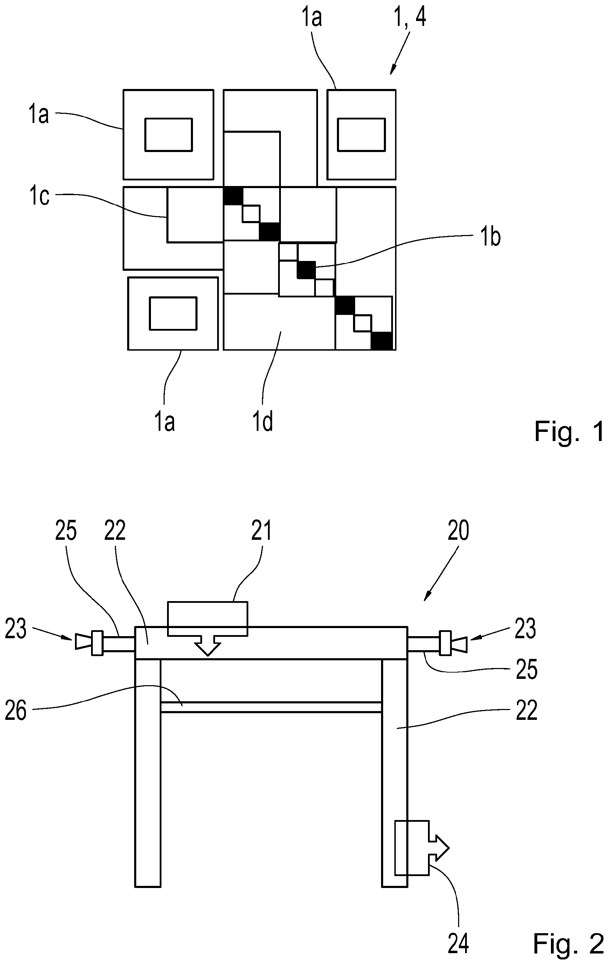

Fig. 1 zeigt einen mehrdimensionalen Code 1 in Form eines Quick Response Codes 4. Der Quick Response Code 4 weist die Form eines Quadrates auf. Der Quick Response Code 4 kann mit bekannten Verfahren der Drucktechnik gedruckt werden. Um einen möglichst hohen Kontrast zu erreichen, wird der mehrdimensionale Code 1 vorzugsweise schwarz auf weiß gedruckt. Es ist auch möglich, den Quick Response Code 4 farbig zu drucken, wobei vorzugsweise Farben eine weitere Codiermöglichkeit darstellen. Der Quick Response Code 4 ist in einer Darstellungsgröße nicht begrenzt. Erforderlich ist lediglich, dass ein Lesegerät 23 den Quick Response Code 4 formatfüllend und differenziert aufnehmen kann.

Der Quick Response Code 4 weist in drei von vier Eckbereichen jeweils ein Positionierungssymbol 1a auf. Durch die Positionierungssymbole 1a kann der Quick Response Code 4 aus jeder Richtung gelesen werden. Informationen sind innerhalb von Zellen 1c decodiert. Die Zellen 1c sind in einem zweidimensionalen Gebiet 1d angeordnet. Die Zellen 1c sind z.B. binär codierte Dateien. Ein Zeitmuster 1b bestehend aus abwechselnd schwarzen und weißen Quadraten, die entlang einer Diagonalen des Quick Response Codes 4 angeordnet sind, erleichtert die Positionierung von Zellen 1c innerhalb des Quick Response Codes 4. Allgemein beschrieben ist ein Quick Response Code 4 in EP 0 672 994 A1.

In Fig. 2 ist ein Parkroboter 20 dargestellt. Der Parkroboter 20 weist einen Grundkörper 22 auf. Mit dem Grundkörper 22 wird ein Fahrzeug 5 von dem Parkroboter 20 aufgenommen, transportiert und/oder auf einen Parkstand 11 positioniert. Der Parkroboter 20 weist eine Antriebsvorrichtung 25 auf. Die Antriebsvorrichtung 25 besteht beispielsweise aus elektrisch angetriebenen Achsen und Rädern. Außerdem weist der Parkroboter 20 ein Verschiebeelement 26 auf. Mit dem Verschiebeelement 26 wird das Fahrzeug 5 auf dem Parkroboter 20 angeordnet. Der Parkroboter 20 ist z.B. ein unterfahrbarer Parkroboter.

Der Parkroboter 20 weist Lesegeräte 23 auf, die jeweils seitlich der Antriebsvorrichtung 25 angeordnet sind. Wenn der Parkroboter 20 Fahrgassen 16 abfährt, sind Parkstände 11 und damit Quick Response Codes 4 in der Regel in einem rechtem Winkel zu dem Parkroboter 20 angeordnet. Durch seitlich angeordnete Lesegeräte 23 liegen die Quick Response Codes 4 also direkt im Sichtfeld der Lesegeräte 23. Die Lesegeräte 23 sind optische Sensoren, die zu einer Grundausstattung des Parkroboters 20 gehören.

Über eine Eingangsschnittstelle 21 erhält der Parkroboter 20 Daten über einen Belegungszustand und/oder Fahrgassen 16 einer Parkfläche 10. Mittels einer Ausgabeschnittstelle 24 stellt der Parkroboter 20 in Abhängigkeit von gelesenen mehrdimensionalen Codes verfügbare Parkstände 11, 12, 13 bereit.

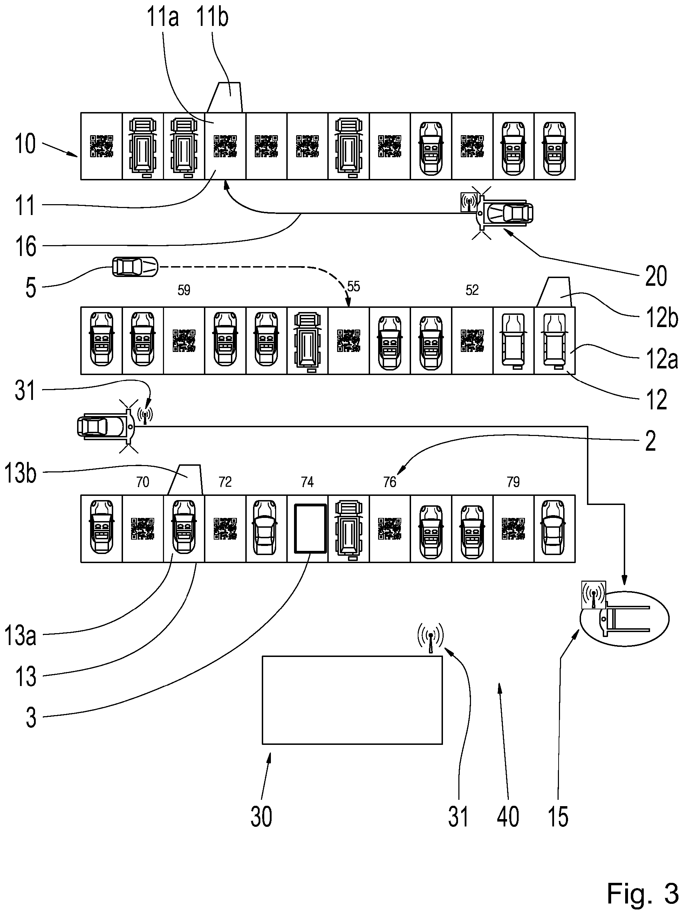

Fig. 3 zeigt ein Parksystem 40. Das Parksystem 40 weist wenigstens eine Parkfläche 10 auf. Bei der Parkfläche 10 kann es sich um eine Etage in einem Parkhaus 14 handeln. Außerdem weist das Parksystem 40 eine Parkauswerteeinrichtung 30 auf. Die Parkauswerteeinrichtung 30 ist beispielsweise ein Server, der über eine drahtlose Kommunikationseinrichtung 31 mit einem Übergabebereich 15 und mit einer Flotte von Parkrobotern 20 kommuniziert. Die Kommunikation erfolgt dabei drahtlos über WLAN. Des Weiteren weist das Parksystem 40 eine Flotte von beispielsweise drei Parkrobotern 20 auf. Das Parksystem 40 ist ein Automated Valet Parking System, das einen Betrieb und eine Verwaltung einer Parkfläche mit Parkrobotern 20 und mit von Fahrern gefahrenen Fahrzeugen 5 ermöglicht.

Die Parkroboter 20 befördern zum einen Kundenfahrzeuge 5 von dem Übergabebereich 15 zu einem Zielparkstand 11. Wird das auf dem Zielparkstand 11 geparkte Fahrzeug 5 von einem Fahrzeugführer wieder gebraucht, transportiert ein Parkroboter 20 das Fahrzeug 5 von dem Zielparkstand 11 wieder zurück zu dem Übergabebereich 15. Zum anderen erfasst der Parkroboter 20 während dem Transport von Fahrzeugen 5 zu Zielparkständen 11 nicht-belegte und belegte Parkstände und überträgt diese Informationen an die Parkauswerteeinrichtung 30. Die Detektion eines Belegungszustandes eines Parkstandes erfolgt über das Erfassen des Quick Response Codes 4, der auf eine Bodenfläche 11a, 12a, 13a oder eine Wandfläche 11b, 12b, 13b des Parkstandes 11, 12, 13 aufgedruckt ist. Der Quick Response Code 4 wird mit dem Lesegerät 23 des Parkroboters 20 erfasst.

Der Quick Response Code 4 codiert die Nummer 2 des Parkstandes und für diesen Parkstand gegebene Nutzungsrechte. Anhand der Nummern der Parkstände kann ermittelt werden, welche Parkstände besetzt sind. Sind z.B. die Parkstände 30 und 33 nicht belegt bzw. wurden diese als nicht belegt erfasst, dann müssen die Parkstände mit den Nummern 31 und 32 belegt sein. Anhand von Koordinaten jeweiliger Parkstände 11, 12, 13, die in dem Quick Response Code 4 codiert sind, kann der Parkroboter 20 besser innerhalb der Parkfläche 10 seine Position bestimmen, z.B. über Simultaneous Localization and Mapping, abgekürzt SLAM. Dies ist für eine genaue Indoor-Navigation von Vorteil.

Die Parkauswerteeinrichtung 30 ist eingerichtet, den Belegungszustand aller Parkstände 11, 12, 13 der Parkfläche 10 zu speichern mittels Kommunikation mit den Parkrobotern 20. Nachdem ein Parkroboter 20 ein Fahrzeug 5 in dem Übergabebereich 15 aufgenommen hat, bestimmt die Parkauswerteeinrichtung 30 den Zielparkstand 11 für diesen Parkroboter 20. Während der Parkroboter 20 auf dem Weg zu dem Zielparkstand 11 ist, kann der Zielparkstand 11 nachträglich von der Parkauswerteeinrichtung geändert werden. Dies ist z.B. dann von Vorteil, wenn zwischenzeitlich der ursprüngliche Zielparkstand 11 von einem fahrergeführten Fahrzeug 5 besetzt wurde und der Belegungszustand dieses Parkstandes 11 der Parkauswerteeinrichtung von einem anderen Parkroboter 20, der gerade an diesem Parkstand 11 vorbeigefahren ist, übermittelt wurde.

Es kann auch der Fall eintreten, dass der Parkroboter 20 seinen Zielparkstand 11 erreicht hat, aber die Situation vorfindet, dass dieser Zielparkstand 11 bereits mit einem von einem Fahrer geführten Fahrzeug belegt wurde, ohne dass die Parkauswerteeinrichtung 30 über diesen Zustand informiert wurde. In diesem Fall fährt der Parkroboter 20 weiter und sucht den nächsten freien Zielparkstand 11 in der unmittelbaren Nähe und berichtet den Belegungszustand an die Parkauswerteeinrichtung 30.

Die Parkauswerteeinrichtung 30 wählt verschiedene Zielparkstände 11 für verschiedene Parkroboter 20 aus, insbesondere derart, dass die ganze Parkfläche 10 des Parkhauses 14 konstant und gleich von Parkrobotern 20 überwacht wird. Dies bedeutet, dass die Parkauswerteeinrichtung 30 nicht zwingendermaßen den nächsten frei verfügbaren Parkstand 11 für einen Parkroboter 20 wählt, sondern einen Parkroboter 20 auch einen längeren Weg auf der Parkfläche 10 fahren lässt.

Der Hauptvorteil dieses Parksystems 40 im Vergleich zu existierenden Automated Valet Parking Systems liegt darin, dass bei einer gegebenen Infrastruktur einer Parkeinrichtung keine kostspielige Ausrüstung der Parkeinrichtung mit weiteren Sensoren erforderlich ist. Das Parksystem 40 kann in ein bestehendes Parkhaus 14 einfach durch Bedruckung von Parkständen 11, 12, 13 mit Quick Response Codes 4 und Verwendung von vorhandenen Parkrobotern 20 integriert werden.

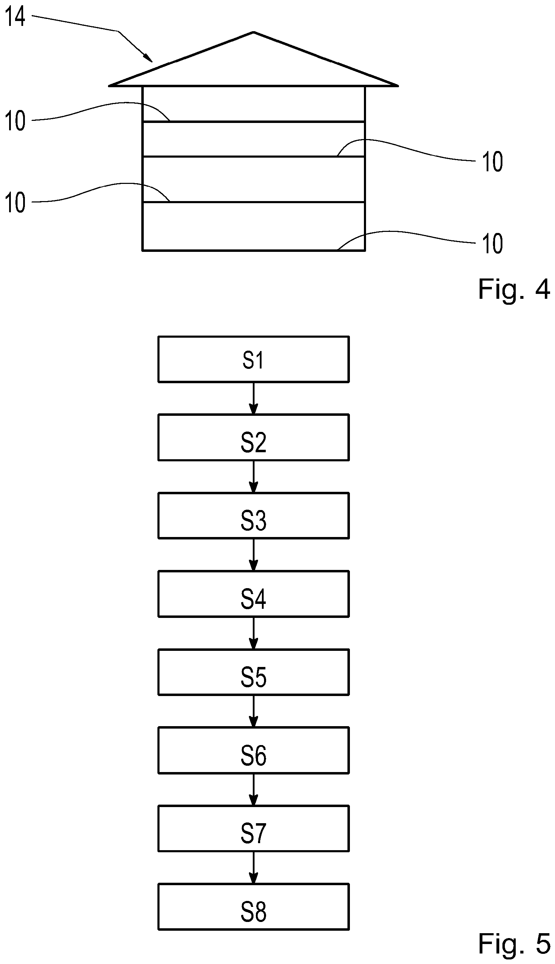

Das Parkhaus 14 ist in Fig. 4 gezeigt. Dieses Parkhaus 14 weist vier Etagen mit jeweils einer Parkfläche 10 auf. Parkroboter 20 befahren Parkflächen auf verschiedenen Etagen. Es kann auch vorgesehen sein, dass für jede Parkfläche einer Etage eine gesonderte Flotte von Parkrobotern 20 bereitsteht.

Die Verfahrensschritte sind in Fig. 5 gezeigt. Mit dem Verfahrensschritt S1 wird ein Fahrzeug 5 in einem Übergabebereich übergeben. Zum Beispiel fährt ein Fahrer mit seinem Fahrzeug 5 in ein Parkhaus 14 ein und übergibt sein Fahrzeug in dem Einfahrtsbereich an das Parksystem 40.

In dem Verfahrensschritt S2 wird ein verfügbarer Zielparkstand 11 der Parkfläche 10 mit der Parkauswerteeinrichtung 30 ausgewählt.

In Abhängigkeit des ausgewählten Zielparkstandes wird im Verfahrensschritt S3 ein Parkroboter 20 durch die Parkauswerteeinrichtung 30 bereitgestellt.

Im Verfahrensschritt S4 transportiert der Parkroboter 20 das Fahrzeug 5 zu dem Zielparkstand 11.

Während des Transports erfasst und liest der Parkroboter 20 auf Parkständen 11, 12, 13 aufgedruckte mehrdimensionale Codes und stellt decodierte Informationen an die Parkauswerteeinrichtung 30 im Verfahrensschritt S5 bereit. Im Verfahrensschritt S6 werden in Abhängigkeit des Zielparkstandes 11 und der decodierten Informationen das Fahrzeug 5 geparkt und dieser Parkzustand an die Parkauswerteeinrichtung 30 bereitgestellt. Nach erfolgtem Positionieren des Fahrzeuges 5 auf dem Parkstand 11 fährt der Parkroboter 20 im Verfahrensschritt S7 auf der Parkfläche 10 weiter und erfasst und liest während dieser Weiterfahrt mehrdimensionale Codes 10. Im Verfahrensschritt S8 werden decodierte Informationen an die Parkauswerteeinrichtung 30 bereitgestellt zur Aktualisierung eines Belegungszustandes der Parkfläche 10.

Damit wird der Belegungszustand der Parkfläche 10 dynamisch erfasst.

### Bezuqszeichen

- 1: mehrdimensionaler Code
- 1a: Positionierungssymbol
- 1b: Zeitmuster
- 1c: Zelle
- 1d: Gebiet
- 2: Nummer
- 3: Objekt
- 4: quick response Code
- 5: Fahrzeug
- 10: Parkfläche
- 11: Parkstand
- 11a: Bodenfläche
- 11b: Wandfläche
- 12: Parkstand
- 12a: Bodenfläche
- 12b: Wandfläche
- 13: Parkstand
- 13a: Bodenfläche
- 13b: Wandfläche
- 14: Parkhaus
- 15: Übergabebereich
- 16: Fahrgasse
- 20: Parkroboter
- 21: Eingangsschnittstelle
- 22: Grundkörper
- 23: Lesegerät
- 24: Ausgabeschnittstelle
- 25: Antriebsvorrichtung
- 26: Verschiebeelement
- 30: Parkauswerteeinrichtung
- 31: Kommunikationseinrichtung
- 40: Parksystem
- S1-S8: Verfahrensschritt

## Patentansprüche

1. Mehrdimensionaler Code (1) mit codierten Informationen, die durch ein Erfassen des Codes lesbar sind, zur Markierung eines Parkstandes (11, 12, 13) einer Parkfläche (10), wobei
- der Code (1) an den Parkstand (11, 12, 13) derart anordenbar ist, dass bei einer Belegung des Parkstandes (11, 12, 13) mit einem Fahrzeug (5) der Code (1) durch das Fahrzeug (5) verdeckt ist, und
- eine codierte Information eine Nummer (2) des Parkstands (11, 12, 13) ist.

2. Mehrdimensionaler Code (1) nach Anspruch 1, **dadurch gekennzeichnet, dass** der Code (1) auf eine Boden (11a, 12a, 13a) - und/oder Wandfläche (11b, 12b, 13b) des Parkstandes (11, 12, 13) aufdruckbar ist.

3. Mehrdimensionaler Code (1) nach Anspruch 1 oder 2, **dadurch gekennzeichnet, dass** die Informationen Koordinaten des Parkstandes (11, 12, 13) und/oder ein Nutzungsrecht für den Parkstand (11, 12, 13) enthalten.

4. Mehrdimensionaler Code (1) nach einem der vorangehenden Ansprüche, **dadurch gekennzeichnet, dass** der Code (1) ein quick-response- Code (4) ist.

5. Verwendung eines mehrdimensionalen Codes (1) nach einem der Ansprüche 1 bis 4 zur Markierung von Parkständen (11, 12, 13), vorzugsweise in einem Parkhaus (14).

6. Parkroboter (20), der ausgebildet ist, ein Fahrzeug (5) auf einer Parkfläche (10) von einem Übergabebereich (15) zu einem Parkstand (11, 12, 13) und/oder von dem Parkstand (11, 12, 13) zu dem Übergabebereich (15) zu transportieren und verfügbare Parkstände (11, 12, 13) zu erkennen, aufweisend
- eine Eingangsschnittstelle (21), die ausgebildet ist, Daten über einen Belegungszustand und/oder Fahrgassen (16) der Parkfläche (10) zu erhalten,
- ein Lesegerät (23), das ausgebildet ist, an den Parkständen (11, 12, 13) jeweils angeordnete mehrdimensionale Codes (1) nach einem der Ansprüche 1 bis 4 zu erfassen und zu lesen, und
- eine Ausgabeschnittstelle (24), die ausgebildet ist, in Abhängigkeit der gelesenen Codes (1) die verfügbaren Parkstände (11, 12, 13) bereitzustellen,
- wobei der Parkroboter (20) ausgebildet ist, in Abhängigkeit der Daten und der gelesenen Codes (1) das Fahrzeug (5) auf dem Parkstand (11, 12, 13) zu positionieren.

7. Parkroboter (20) nach Anspruch 6, **dadurch gekennzeichnet, dass** der Parkroboter (20) ausgebildet ist, in Abhängigkeit von codierten Koordinaten der Parkstände (11, 12, 13) auf der Parkfläche (10) zu navigieren.

8. Parksystem (40) aufweisend
- eine Parkfläche (10) mit Parkständen (11, 12, 13), wobei die Parkstände (11, 12, 13) jeweils mit einem mehrdimensionalen Code (1) nach einem der Ansprüche 1 bis 4 markiert sind,
- Parkroboter (20) nach einem der Ansprüche 6 oder 7,
und
- eine Parkauswerteeinrichtung (30), wobei die Parkauswerteeinrichtung (30) ausgebildet ist, den Parkrobotern (20) Fahrgassen (16) und/oder Nummern (2) von verfügbaren Parkständen (11, 12, 13) bereitzustellen und die Fahrgassen (16) und/oder Nummern (2) von verfügbaren Parkständen (11, 12, 13) in Abhängigkeit der von den Parkrobotern (20) gelesenen Codes (1) zu aktualisieren.

9. Parksystem (40) nach Anspruch 8, **dadurch gekennzeichnet, dass** das Parksystem (40) eine Flotte von Parkrobotern (20) aufweist.

10. Verwendung eines Parksystems (40) nach Anspruch 8 oder 9 in einem Parkhaus (14).

11. Verfahren zum automatisierten Transportieren und Parken von Fahrzeugen (5) auf einer Parkfläche (10) mit Parkständen (11, 12, 13), wobei die Parkstände (11, 12, 13) jeweils mit einem mehrdimensionalen Code (1) nach einem der Ansprüche 1 bis 4 markiert sind, mit den folgenden Verfahrensschritten:
- Übergabe eines Fahrzeuges (5) in einem Übergabebereich (15) (S1),
- Auswahl eines verfügbaren Ziel-Parkstandes (11) der Parkfläche (10) mit einer Parkauswerteeinrichtung (30) (S2),
- in Abhängigkeit des ausgewählten Ziel-Parkstandes (11) Bereitstellen eines Parkroboters (20) durch die Parkauswerteeinrichtung (30) (S3),
- Transport des Fahrzeuges (5) zu dem Ziel-Parkstand (11) durch den Parkroboter (20) (S4),
- während des Transports Erfassen und Lesen der mehrdimensionalen Codes (1) durch den Parkroboter (20) und Bereitstellen von decodierten Informationen an die Parkauswerteeinrichtung (30) (S5),
- in Abhängigkeit des Ziel-Parkstandes (11) und der decodierten Informationen Parken des Fahrzeuges (5) und Bereitstellen dieses Parkzustandes an die Parkauswerteeinrichtung (30) (S6),
- Weiterfahren des Parkroboters (20) auf der Parkfläche (10) (S7), und
- während der Weiterfahrt Erfassen und Lesen der mehrdimensionalen Codes (10) durch den Parkroboter (20) und Bereitstellen von decodierten Informationen an die Parkauswerteeinrichtung (30) zur Aktualisierung eines Belegungszustandes der Parkfläche (10) (S8).

12. Verfahren nach Anspruch 11, **dadurch gekennzeichnet, dass**
- in Abhängigkeit von Daten der Parkauswerteeinrichtung (30) der Parkroboter (20) das Fahrzeug (5) von dem Ziel-Parkstand (11) zu dem Übergabebereich (15) transportiert, und
- der Parkroboter (20) eine Nummer (2) des frei gewordenen Ziel-Parkstandes (11) der Parkauswerteeinrichtung (30) bereitstellt.

13. Verfahren nach Anspruch 11 oder 12, **dadurch gekennzeichnet, dass** die Parkauswerteeinrichtung (30) dem Parkroboter (20) Fahrgassen (16) für den Transport des Fahrzeuges (5) vorgibt.

14. Verfahren nach einem der Ansprüche 11 bis 13, **dadurch gekennzeichnet, dass** die Parkauswerteeinrichtung (30) eine Flotte von Parkrobotern (20) bereitstellt und den Parkrobotern (20) der Flotte Fahrgassen (16) für den Transport des Fahrzeuges (5) vorgibt.

15. Verfahren nach einem der Ansprüche 11 bis 14, **dadurch gekennzeichnet, dass** zur Durchführung des Verfahrens ein Parkroboter (20) nach einem der Ansprüche 6 oder 7 und/oder ein Parksystem (40) nach einem der Ansprüche 8 oder 9 verwendet werden.
